# EUROPEAN PATENT SPECIFICATION

(11) **EP 2 624 521 B1**
(45) Date of publication and mention of the grant of the patent: **12.10.2016**
(21) Application number: 12305127.8
(22) Date of filing: 02.02.2012
(51) Int. Cl.: H04L 29/06, H04W 36/00

(54) **Nodes and method for seamlessly processing RTP packets**
Knoten und Verfahren zur nahtlosen Verarbeitung von RTP-Paketen
Noeuds et procédé de traitement de paquets RTP sans interruption

(43) Date of publication of application: 07.08.2013
(73) Proprietor: ALCATEL LUCENT, 92100 Boulogne-Billancourt (FR)
(72) Inventor: Leclerc, Brice, 91620 NOZAY (FR); Yuan, Yuan, 91620 NOZAY (FR)
(74) Representative: Berthier, Karine

(56) References cited:
- US-A1- 2010 177 734

## Description

### TECHNICAL FIELD

The present invention relates generally to network communications and in particular to RTP communication sessions between transmitter nodes and receiver nodes.

### BACKGROUND

The Real-time Transport Protocol (RTP) defines a standardized packet format for delivering audio and/or video over IP networks. RTP is used extensively in communication systems that involve transmitting real-time data, such as telephony, video teleconference applications and web-based push-to-talk features.

The current RTP structure is described in the Request for Comments (RFC) 3550.

Within a telephony RTP session between a transmitter node, such as a mobile telephone, and a receiver node, such as another mobile telephone, the transmitter node uses an audio source to generate an audio stream. Said audio stream comprises RTP packets which each includes a synchronization source (SSRC) identifier supposed to uniquely identify, within said RTP session, the audio source from which said RTP packet has been generated. Such SSRC identifier enables the receiver node to select, among RTP packets received from different sources such as other audio sources from the same transmitter node or from other transmitter nodes, the RTP packets generated from said audio source to reconstruct the audio stream. The transmitter node may also use a video source to generate a video stream comprising RTP packets including another synchronization source (SSRC) identifier.

On a theater crisis, it is important to deploy communication networks easily and quickly. In particular, it may be interesting to deploy IP communication networks enabling RTP session between transmitter nodes and receiver nodes to transmit real-time data. Nevertheless, deployed IP communication networks often include heterogeneous IP networks and need Mobile IP (MIP) configurations to enable a transmitter node to perform seamless handover, what is tricky to configure in emergency.

Mobile IP is an IETF standard communications protocol that is designed to allow mobile device users to move from one network, called home network, to another, called foreigner network, while maintaining a permanent IP address. Within a Mobile IP protocol, each mobile node is identified by its home address disregarding its current location in the Internet. While away from its home network, a mobile node is associated with a care-of address which identifies its current location and its home address is associated with the local endpoint of a tunnel to its home agent. Said home agent is a router on a mobile node's home network that uses tunneling mechanisms to forward Internet traffic to the care of address so that the node's IP address, defined by said home address, doesn't have to be changed each time it connects from a different location.

A solution to exempt oneself from tunneling configuration with such a home agent and the permanent home address of the transmitter node, is to use a Not Mobile IP (NMIP) transmitter node. Such a transmitter node is referred as NMIP to distinguish it from a Mobile IP transmitter node.

NMIP protocol comprises a set of extensions to the IP protocol that provide secure macro-mobility to IP-enabled nodes without the use of permanent home agents, return-routability tests, or extensive tunneling/triangular routing. In particular, a NMIP node is not assigned a permanent home address and does not need a home agent, contrary to a Mobile IP node.

Instead, a typical NMIP node possesses only one IP address: the IP address assigned to the node by the access network router to which the node is currently attached. The current basic NMIP structure is described in patent application US2010/0135301 filed on November 4, 2009, in the name of ALCATEL-LUCENT USA INC.

Nevertheless, while a NMIP transmitter node is within a RTP session with a receiver node through a first access network router and performs a handoff between said first access network router and a second access network router, said second access network router assigns to said NMIP transmitter node another IP address.

As an IP address change implies an SSRC change of each source integrated in the transmitter node, first RTP packets of an audio stream generated by said audio source and transmitted through said first access network router, will have a SSRC different from the one of second RTP packets of the audio stream generated by said audio source and transmitted through said second access network router.

As a result, the audio stream received by the RTP receiver may comprise RTP packets having different SSRCs.

A conventional RTP receiver will reject at least some of said second RTP packets whose SSRC is different from the SSRC of said first RTP packets of the audio stream received by said RTP receiver, because such second RTP packets of the stream are seen as being transmitted by an unauthorized source.

Moreover, since a conventional RTP receiver is configured to introduce a delay before processing RTP packets of a stream whose SSRC is heard for the first time, some packets of said stream may be discarded.

Independently of such an handoff embodiment, it would also be interesting to have the possibility of transmitting part of the RTP packets, called first RTP packets, of a given stream through a first access network router and the remainder, called second RTP packets, through a second access network router, for example to beneficiate from specific properties (data rate, QoS...) of said first and second access networks router. Nevertheless, first RTP packets will have a first SSRC identifier and second RTP packets will have a second SSRC identifier so that, as explained above, a conventional RTP receiver will reject some of said first or second RTP packets and will not be able to reconstruct said given stream.

There is thus a need to enable a RTP receiver node to seamlessly reconstruct a given stream formed with RTP packets which have been transmitted to said RTP receiver through different access network routers and which comprise different SSRCs.

Document US2010177734 discloses a communication device comprising a packet reception unit for receiving packets from an opponent communication device connected to said communication device, a jitter buffer for storing the packets received, and a continuity recognition unit for causing said communication device to recognize, when handover takes place to an original opponent communication device, that packets from the original opponent communication device stored in said jitter buffer and packets received from a new opponent communication device after the handover are continuous packets in the same session.

### SUMMARY

Embodiments described herein provide methods and related transmitting apparatus and receiver nodes adapted to the transmission/reception of RTP packets within a RTP session with improved reliability and efficiency.

Various embodiments provide a method for transmitting RTP packets from at least a first transmitter node to a receiver node within a RTP session through a packet switched communication network, said method comprising the steps of:
generating and transmitting at said first transmitter node first RTP packets including a first SSRC identifier ;
generating and transmitting second RTP packets including a second SSRC identifier ;
generating and transmitting a tracking information associating said first SSRC identifier with said second SSRC identifier in order to indicate to said receiver node that said first RTP packets and second RTP packets can be combined into a single packets stream as packets generated by the same source.

RTP receiver is thus able to continuously and seamlessly listen a given stream despite of the different SSRCs of received RTP packets.

Indeed such a tracking information enable a RTP receiver node to seamlessly reconstruct a given stream formed with RTP packets which have been transmitted to said RTP receiver trough different access networks routers and which comprise different SSRCs.

Moreover, second SSRC identifier being identified as SSRC identifier of the same source that the one identified by first SSRC identifier, receiver node may process second RTP packets without introducing any delay.

In various embodiments, both of said first RTP packets and said second RTP packets are generated at a unique packet stream source of said first transmitter node respectively before and after a handoff of said first transmitter node from a first access network router to a second access network router of said packet switched communication network, said first RTP packets being transmitted through said first access network router and said second RTP packets being transmitted through said second access network router.

According to another aspect, said method further comprises acquiring, at said first transmitter node, a first IP address and a second IP address respectively from said first access network router and said second access network router.

In various embodiments, said tracking information is generated and transmitted at said first transmitter node.

According to a further aspect, said first RTP packets are generated at a first packet stream source of said first transmitter node while said second RTP packets are generated at a second packet stream source of a second transmitter node associated with said first transmitter node, and wherein said first RTP packets are transmitted through a first access network router of said packet switched communication network while said second RTP packets are transmitted through a second access network router of said packet switched communication network.

According to some embodiments, said method further comprises acquiring, at said first transmitter node, a first IP address from said first access network router and acquiring, at said second transmitter node, a second IP address from said second access network router.

According to another aspect, said method further comprises transmitting said tracking information before or simultaneously with said second RTP packets.

Various embodiments also comprise a method for seamlessly processing, at a receiver node, RTP packets received from at least a first transmitter node within a RTP session through a packet switched communication network, said method comprising the steps of :
- receiving at said receiver node at least first RTP packets including a first SSRC identifier and second RTP packets including a second SSRC identifier ;
- combining at said receiver node said at least first RTP packets and second RTP packets into a single packet stream as packets generated by the same source, upon reception of a tracking information associating said first SSRC identifier with said second SSRC identifier.

According to another aspect, it is provided a transmitting apparatus for transmitting RTP packets to a receiver node within a RTP session through a packet switched communication network, said transmitting apparatus comprising:
- a first transmitter node comprising first generating means and first transmission means adapted to respectively generate and transmit first RTP packets including a first SSRC identifier;
- second generating means and second transmission means respectively adapted to generate and transmit second RTP packets including a second SSRC identifier;
- third means adapted to generate and transmit a tracking information associating said first SSRC identifier with said second SSRC identifier in order to indicate to said receiver node that said first RTP packets and second RTP packets can be combined into a single packet stream as packets generated by the same source.

According to a further aspect, said first generating means and said second generating means comprise a unique packet stream source of said first transmitter node, and wherein said first transmission means, said second transmission means and said third means are within said first transmitter node, said unique packet stream source being adapted to generate both of said first RTP packets and said second RTP packets respectively before and after a handoff of said first transmitter node from a first access network router to a second access network router of said packet switched communication network, said first transmission means being adapted to transmit said first RTP packets through said first access network router and said second transmission means being adapted to transmit said second RTP packets being transmitted through said second access network router.

In various embodiments, said first transmitter node further comprises acquisition means adapted to acquire a first IP address and a second IP address respectively from said first access network router and said second access network router.

According to another embodiment, said first generating means comprise a first packet stream source of said first transmitter node while said second generating means comprise a second packet stream source of a second transmitter node associated with said first transmitter node, wherein said first transmission means are within said first transmitter node and are adapted to transmit said first RTP packets through a first access network router of said packet switched communication network while said second transmission means are within said second transmitter node and are adapted to transmit said second RTP packets through a second access network router of said packet switched communication network.

According to another aspect, it is provided a receiver node for seamlessly processing RTP packets received from at least a first transmitter node within a RTP session through a packet switched communication network, said receiver node comprising:
- receiving means adapted for receiving at least first RTP packets including a first SSRC identifier, second RTP packets including a second SSRC identifier and a tracking information associating said first SSRC identifier with said second SSRC identifier ;
- combining means adapted to combine, upon reception of said tracking information, said at least first RTP packets and second RTP packets into a single packet stream as packets generated by the same source.

Various combinations and subset of the above aspects are provided.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### BRIEF DESCRIPTION OF THE DRAWINGS

Some embodiments of apparatus and/or methods in accordance with embodiments of the present invention are now described, by way of example only, and with reference to the accompanying drawings, in which:
FIG.1 is a simplified diagram of a communication network including a transmitter node adapted to transmit RTP packets before and after a handoff;
FIG.1A is a schematic view of functional elements included in the transmitter node according to the embodiment of FIG. 1;
FIG.1B is a schematic view of functional elements included in the receiver node according to the embodiment of FIG. 1;
FIG.1C is a flow diagram illustrating a method carried out by a transmitter node according to the embodiment of FIG.1 to transmit RTP packets before and after a handoff ;
FIG.1D is a flow diagram illustrating a method carried out by a receiver node according to the embodiment of FIG.1, for combining received RTP packets which include different SSRC identifiers ;
FIG.2 is a simplified block diagram of another communication network including a transmitting apparatus which comprises two transmitter nodes adapted to transmit RTP packets through different access network routers;
FIG.2A is a schematic view of functional elements of the transmitter nodes included in the transmitting apparatus according to the embodiment of FIG. 2 ;
FIG.2B is a flow diagram illustrating a method carried out by the transmitter nodes included in the transmitting apparatus according to the embodiment of FIG.2, for transmitting RTP packets which have to be combined at a common receiver node;
FIG. 3 shows the structure of the header of a typical RTP packet;
FIG. 4 shows the structure of the header extension of a RTP packet according to an embodiment.

### DETAILED DESCRIPTION

The figures and the following description illustrate specific exemplary embodiments of the invention.

A communication network comprises two or more nodes and the physical link(s) between the nodes. Nodes may comprise any IP connected devices such as for instance mobile telephones or laptops. Nodes may also comprise home computers. Depending on the embodiments, nodes may be mobile or not. According to various embodiments, one or a plurality of nodes may also be integrated in an apparatus.

On a packet-switched communication network, e.g. the Internet, communications are in the form of discrete units of information known as packets. A typical communication on the Internet is between two endpoint nodes generating and sending packets to each other via one or more links and zero, one, or more intermediate nodes.

The Internet is a digital packet-switched network that uses the four-layer Internet Protocol suite for the generation and processing of packets. The Internet Protocol suite (IP suite) is defined in Internet Engineering Task Force (IETF) Request for Comment (RFC) 1122.

A typical node connects to the Internet via an access network router, eventually through a wireless access point. A typical access network router manages an IP-address range also known as a subnet. A router is a network node that retransmits received packets towards one or more other network nodes. A node connects to the Internet by first establishing a link-layer (e.g., Ethernet) connection with the access-network router. Typically, the router then assigns the next available address from the subnet to the node. The node then can establish transport-layer sessions and conversations with other nodes on the Internet.

A solution to enable a node, which has established a session with another node, to move from a first access network router to a second access network router without interrupting the session, is to use a Mobile IP (MIP) protocol. Mobile IP protocols include Mobility Support in IP version 4 (MIPv4), defined in IETF RFC 3344, and Mobility Support in IP version 6 (MIPv6), which is defined in IETF RFCs 3775 and 4866.

MIP protocols allow location-independent routing of IP packets on the Internet. Within a Mobile IP implementation, a mobile node has two addresses: a permanent home address and a care-of address (CoA) which is associated with the access network router the mobile node is connected, for example said second access network router. A home agent, for example said first access network router, stores information about mobile nodes whose permanent home address is in the home agent's network. In this example, the second access network router is called foreign agent and stores information about mobile nodes visiting its network.

Thus, a node wanting to communicate with the mobile node uses the permanent home address of the mobile node as the destination address to send packets to. Because the home address logically belongs to the network associated with the home agent, normal IP routing mechanisms forward these packets to the home agent. Instead of forwarding these packets to a destination that is physically in the same network as the home agent, the home agent redirects these packets towards the care-of address of the mobile node. Redirection is realized through an IP tunnel by encapsulating the packet with a new IP header using the care of address of the mobile node.

However such a Mobile IP implementation leads to increased complexity, increased packet overhead, exclusion of more-efficient routes, security threat or requires route optimization which consumes significant resources and increases latency.

A solution to encompass the drawbacks of Mobile IP protocols is to implement a NMIP protocol as described in further details in patent application US2010/0135301 filed on November 4, 2009, in the name of ALCATEL-LUCENT USA INC. A brief explanation of what is NMIP is given hereafter.

Within an NMIP implemented embodiment for which two nodes have an established transport-layer session and an established application-layer session, either node is able to change its IP address (a network-layer change) without interrupting either that transport-layer session or that application-layer session.

NMIP protocol does not assign a permanent home address to a node. Instead, a typical NMIP node possesses only one IP address: the IP address assigned to the node by the access network router to which the node is currently attached.

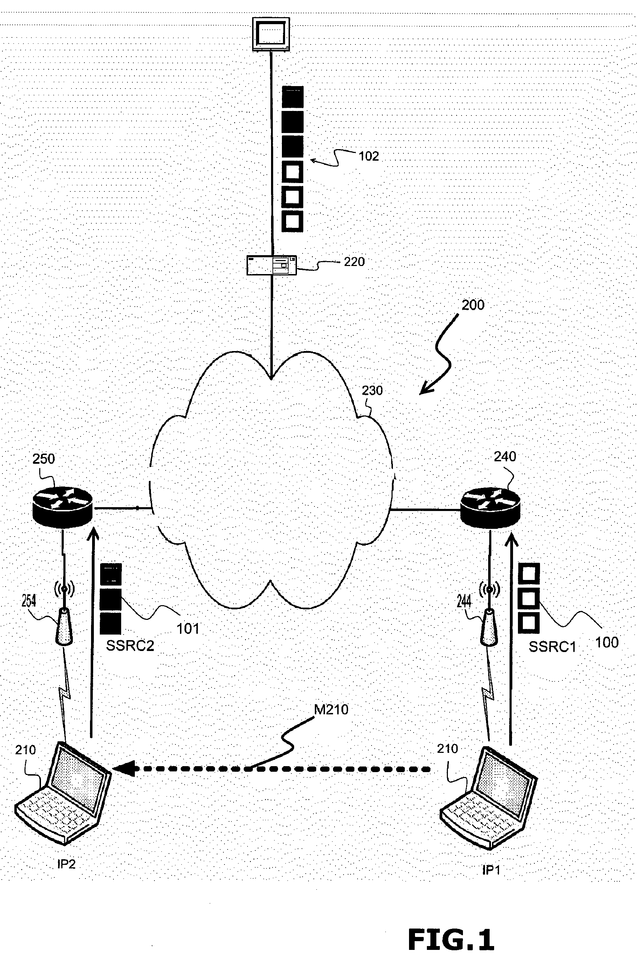

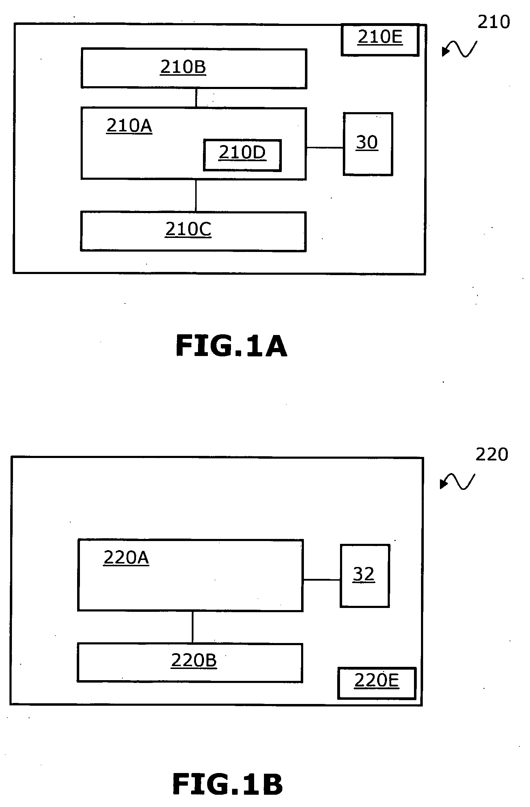

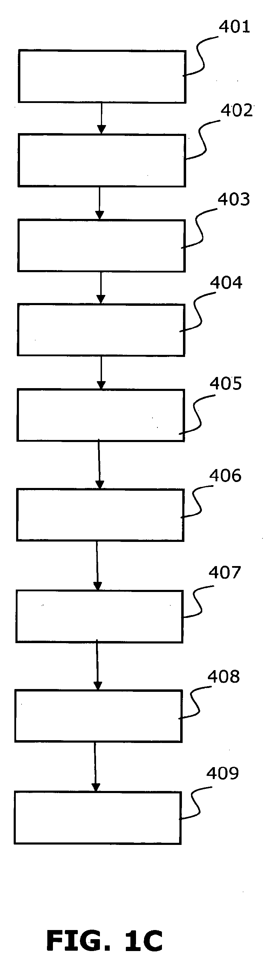

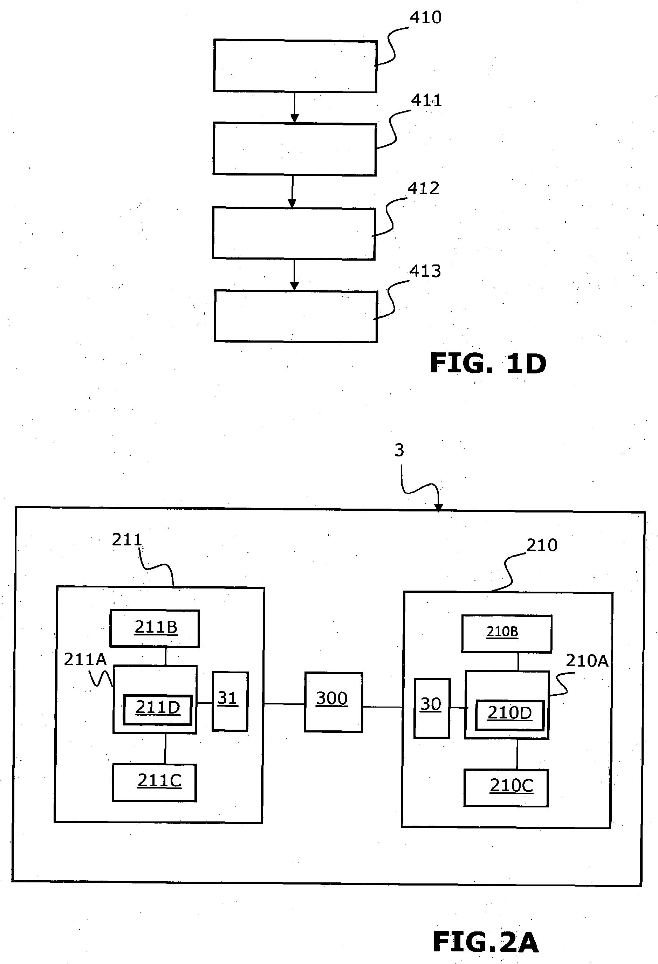

An example of NMIP implementation will now be described with reference to an embodiment of nodes and related network illustrated at FIG 1. In this embodiment, network 200 comprises a transmitter node 210, a receiver node 220, Internet 230, and access networks routers 240 and 250. Obviously, node 210 may also be adapted to receive data and receiver node may be adapted to transmit data to enable nodes 210, 220 to communicate in both directions. Node 210 is referred has "transmitter" node and node 220 is referred as "receiver" node to simplify the explanations. In other words, transmitter node 210 may also work as a receiver node and receiver node 220 may also work as a transmitter node.

In the embodiment of FIG.1, access network routers 240, 250 are respectively connected to wireless access points 244, 254. Said wireless access points may use various standards of communication such as the IEEE 802.11 family of standards, UMTS or LTE.

For example, router 240 manages subnet 1.1.1.x and router 250 manages subnet 2.2.2.x. Node 210, router 240, and router 250 connect to the Internet 230.

Transmitter node 210 and receiver node 220 are adapted to acquire an IP address and to establish a session to exchange packets. In the embodiment of FIG.1, receiver node 220 is connected to the Internet 230.

Transmitter node 210 is initially connected to receiver node 220 via access network router 240 which assigns to said transmitter node 210 an IP address IP1, for example 1.1.1.1. Transmitter node 210 transmits an NMIP registration message to receiver node 220. The NMIP registration message contains (i) a nonce identifying node 210 and (ii) a nonce lifetime value for node's 210 nonce.

A nonce chosen by a node is a random number that functions as a unique identifier for the node. The nonce lifetime is a specific duration associated with a nonce, after which the nonce is no longer valid. The term "nonce" was coined by Roger Needham and Michael Schroeder to refer to a value that is "used only once." See R. Needham and M. Schroeder, "Using encryption for authentication in large networks of computers," Communications of the ACM, 21 (12), December 1978.

A typical NMIP node maintains a locally stored data structure called a session table. When two NMIP nodes establish a new NMIP session, both nodes add a record to their respective session tables. Each session-table record comprises :
(i) the network address of the other node in the NMIP session,
(ii) the nonce of the other node, and
(iii) the lifetime of the nonce of the other node.
When the NMIP session is terminated by either node or the nonce of the other node expires (i.e., the lifetime has expired), the corresponding record is deleted from the session table.

In the embodiment of FIG.1, when node 210 possessing first IP address IP1 moves from first access network router 240 to second access network router 250, node 210 acquires a second IP address IP2 from the second access network router 250 which is different from IP1.

In response to its new network address IP2, node 210 transmits an NMIP address-update message to node 220. The NMIP address-update message contains :
(i) node's 210 nonce,
(ii) node's 210 old network address IP1, and
(iii) node's 210 new network address IP2.

Receiving said NMIP address-update message, node 220 analyses the received nonce with regard to its session table to verify that new packets 101 arriving from the new network address IP2 belong to the conversation that started using the other network address IP1. If the analyzed nonce correspond to the one registered in the table session, the node 220 updates said table session with the new network address IP2 of node 210.

Thus, with such an NMIP implementation, node 210 is able to change its IP address without interrupting the transport-layer session or the application-layer session with node 220.

Embodiments described with reference to the accompanying drawings relate to a Real-time Transport Protocol (RTP) session between at least two nodes. As explained above, RTP is used in communication systems that involve transmitting real-time data. RTP is also used in conjunction with the RTP Control Protocol (RTCP). While RTP carries the media streams (e.g. audio and video), RTCP is used to monitor transmission statistics and quality of service (QoS) and aids synchronization of multiple streams. RTP is originated and received on even port numbers and the associated RTCP communication uses the next higher odd port number. The current RTP and RTCP structures are described in the Request for Comments (RFC) 3550.

In the described embodiments, the RTP application considered is Voice Over IP (VOIP). Obviously, the invention is not limited to telephony applications and may be implemented for other applications such as video teleconference applications. Data transported by RTP in a packet may be for example audio samples or compressed video data. In a multimedia session, each medium is carried in a separate RTP session with its own RTCP packets. The multiple RTP sessions are distinguished by different port number pairs and/or different network addresses.

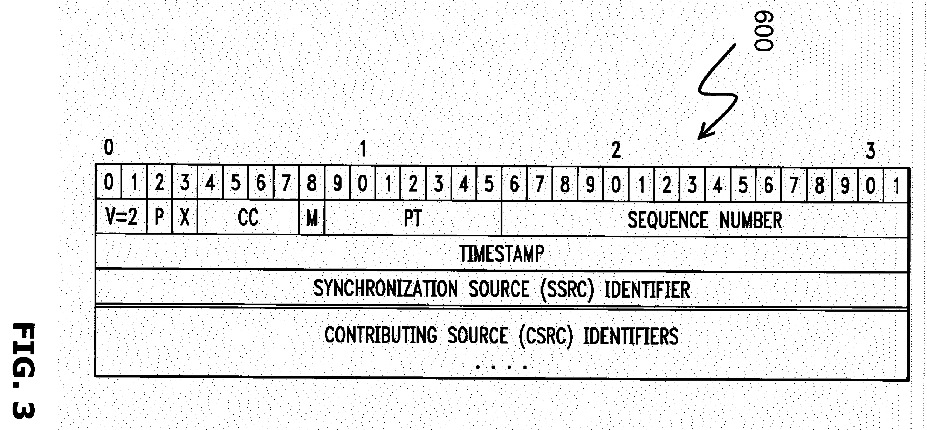

FIG. 3 shows the structure of the header 600 of a typical RTP packet. Version (V) field identifies the version of RTP. Padding (P) field indicates if the packet contains one or more additional padding octets at the end which are not part of the payload. Extension (X) field indicates if the fixed header must be followed by a header extension. CSRC count (CC) field contains the number of CSRC identifiers that follow the fixed header. Marker (M) field allow significant events such as frame boundaries to be marked in the packet stream. Payload type (PT) field identifies the format of the RTP payload. Sequence number field increments by one for each RTP data packet sent, and may be used by receiver node to detect packet loss and to restore packet sequence. The initial value of the sequence number should be random. Timestamp field reflects the sampling instant of the first octet in the RTP data packet. The sampling instant is derived from a clock that increments monotonically and linearly in time to allow synchronization and jitter calculations. The SSRC field identifies the (synchronization) source of RTP packets of a stream. In particular SSRC identifier is carried in the RTP header so as not to be dependent upon the network address. All packets from a synchronization source form part of the same timing and sequence number space, so that a receiver node groups packets by synchronization source for playback. Synchronization sources include for example a RTP packet generation source adapted to generate a stream of RTP packets derived from a signal source such as a microphone.

The SSRC identifier is a randomly chosen value meant to be globally unique within a particular RTP session. If a node generates multiple streams in one RTP session, for example from separate microphones or video cameras, each must be identified as a different SSRC.

RTP header 600 also includes optional contributing source (CSRC) identifiers field so that multimedia mixers, which combine multimedia contents from multiple synchronization sources, can insert the SSRC identifiers of the multiple contributing synchronization sources in the CSRC field of corresponding RTP packets output by the mixer.

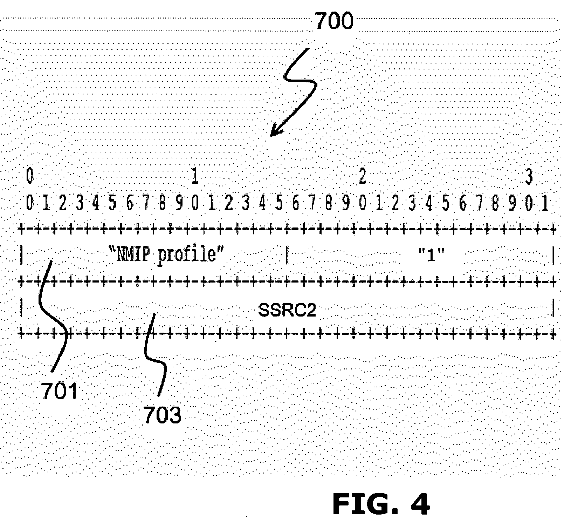

The structure of header extension 700 of a RTP packet is detailed at FIG. 4. Field 701 corresponds to the first 16 bits of the header extension 700 that are left open for distinguishing identifiers or parameters. The header extension also contains a 16-bit length field 702 that counts the number of 32-bit words in the extension, excluding the four-octet extension header.

In the following description of embodiments as illustrated at FIG.1, it is considered that NMIP protocol is implemented to enable transmitter node 210 changing IP address without interrupting the session established with receiver node 220.

Thus, in the embodiment of FIG.1, transmitter node 210 is adapted to communicate with receiver node 220 within a NMIP implemented RTP session through packet switched communication network 200.

With reference to FIG.1A, transmitter node 210 comprises a processor 30, generating means 210A and transmission means 210B. Said generating means 210A comprise a RTP packet generation source 210D adapted to communicate with processor 30 to generate a stream of RTP packets 100 derived from a signal source such as a microphone.

Transmission means 210B are adapted to transmit to receiver node 220 the generated stream of RTP packets 100 over one or more physical links, e.g., copper wire, optical fiber, or air (i.e., wireless). Transmitter node 210 also comprises acquisition means 210E adapted to acquire a first IP address IP1 and a second IP address IP2 respectively from said first access network router 240 and said second access network router 250.

With reference to FIG.1B, said receiver node 220 comprises receiving means 220B adapted for receiving RTP packets and combining means 220A adapted to group packets by synchronization source. Combining means 220A cooperate with a processor 32 to playback the stream of grouped RTP packets. Combining means 220A present also a supplemental functionality detailed hereinafter. Receiver node 220 also comprises acquisition means 220E adapted to acquire an IP address to establish a network connection to the Internet 30 and thus communicate with transmitter node 210.

As explained above, transmitter node 210 is initially connected the access network router 240 which assigns to said node IP address IP1.

While connected to said access network router 240, source 210D of node 210 is adapted to generate first RTP packets 100 including a first SSRC identifier SSRC1.

As illustrated by the broken arrow referred as M210 at FIG. 1, it is assumed that node 210 moves from access network router 240 to access network router 250. In that case, mobile node 210 is configured to discard the previous IP address IP1 and acquire second IP address IP2 from access network router 250.

As explained above, within a NMIP implementation, transmitter node 210 transmits an NMIP address-update message to receiver node 220 so that the session between both nodes is not interrupted despite of node's 210 address change.

Operations concerning RTP packets processing will now be examined.

As node's 210 IP address changes, RTP process implemented within transmitter node 210 choose a new SSRC identifier, referred as SSRC2, for the SSRC identifier included in second RTP packets 101 generated by the source 210D while transmitter node 210 is connected to access network router 250.

Said new SSRC identifier may be generated in real time or may have been generated previously to the handoff. Note that the value of a SSRC identifier does not necessarily depends on the network address of the corresponding node. But, when IP address of said node changes, RTP process changes the SSRC identifier of the RTP packet generated by the source 210D.

As a result, although both of said first RTP packets 100 and said second RTP packets 101 are generated by unique stream source 210D, said RTP packets 100, 101 comprise different SSRCs.

In view of enabling receiver node 220 to understand that RTP packets 100 and RTP packets 101 have been generated by the same source and thus have to be combined in a single packet stream 102, transmitter node 210 comprises third means 210C adapted to generate and transmit a tracking information associating said first SSRC identifier SSRC1 with said second SSRC identifier SSRC2.

In various embodiments, said tracking information comprises integration of SSRC identifier SSRC2 of the second RTP packets 101 in one or a plurality of first RTP packets 100. For example, as illustrated at FIG.4, said value SSRC2 of second RTP packets 101 may be contained in the RTP packet header extension 700 of one or a plurality of first RTP packets 100.

In particular, according to various embodiments, header extension 700 of a RTP packet, for instance a RTP packet 100, comprise a field 703 used to specify the SSRC identifier of other RTP packets, for instance RTP packets 101, which includes a SSRC identifier, for example SSRC2, different from the SSRC identifier, for example SSRC1, included in the RTP packet header 600 of said RTP packet 100.

Furthermore, according to various embodiments, field 701 of the header extension 700 of a RTP packet, for instance a RTP packet 100, is used to specify a predefined profile parameter indicating the receiver node 220 a predefined profile to use for analyzing header extension 700 of said RTP packet 100. Said predefined profile instructs the receiver node 220 that said RTP packet 100 belongs to the same packets stream than other RTP packets, for instance RTP packet 101, whose SSRC identifier, for instance SSRC2, is equal to the SSRC identifier specified in field 703 of the header extension 700 of said RTP packet 100.

In particular, in the example of FIG.4, header extension field 701 is specified as "NMIP profile" what correspond to a predefined profile parameter interpreted by the receiver node as an instruction to combine received RTP packets 100, 101 whose SSRC is equal to SSRC1 or to SSRC2.

In other embodiments, said tracking information comprises the integration by transmitter node 210 of the SSRC identifier SSRC1 of first RTP packets 100 in one or in a plurality of second RTP packets 101. For example, said value SSRC1 of first RTP packets 100 may be integrated in the RTP packet header extension of one or a plurality of second RTP packets 101 as explained above.

In alternative embodiments, said tracking information is included in at least one RTCP packet. In particular, in various embodiments, said tracking information is integrated in a CNAME identifier and/or in a RTCP SDES packet. CNAME identifier and RTCP SDES packet are detailed in RFC 3550. The frequency with which said tracking information is included in RTP packets and/or RTCP packets depends on the packet loss rate previously measured in the network.

To seamlessly process received RTP packets 100, 101, said combining means 220B of receiver node 220 are adapted to combine, upon reception of said tracking information, first RTP packets 100 and second RTP packets 101 into a single packet stream 102. Thanks to the tracking information received, RTP packets 100 and RTP packets 101 are combined as if they were associated to a unique transmitting source.

The flowchart at FIG.1C illustrates an embodiment of the method for transmitting packets from transmitter node 210 to receiver node 220.

At step 401, transmitter node 210 acquires first IP address IP1 from first access network router 240. At step 402, transmitter node 210 establishes an NMIP implemented RTP session with receiver node 220. At step 403, source 210D of transmitter node 210 generates first RTP packets 100 including first SSRC identifier SSRC1. At step 404, transmitter node 210 transmits to said receiver node 220, through said first access network 240, said first RTP packets 100. At step 405, transmitter node 210 performs a handoff discarding first IP address IP1 and acquiring second IP address IP2 from second access network router 250. At step 406, second SSRC identifier SSRC2, different from SSRC1, is generated. At step 407, a tracking information, which associates SSRC1 to SSRC2 as detailed above, is generated and transmitted to receiver node 220. At step 408, source 210D generates second RTP packets 101 including said second SSRC identifier SSRC2. At step 409, second RTP packets 101 are transmitted to receiver node 220.

Step 406 and 407 may be executed before step 401 or inserted in the sequence of steps 401 to 405. In particular, according to various embodiments, tracking information is transmitted by transmitter node 210 before transmission of second RTP packets 101. In this case, SSRC2 is generated before handoff of transmitter node 210. In other embodiments, tracking information is transmitted by transmitter node 210 simultaneously with second RTP packets 101.

The flowchart at FIG.1D illustrates an embodiment of the method carried on by the receiver node 220 for seamlessly processing RTP packets 100, 101 received from transmitter node 210 within a RTP session through a packet switched communication network 200 as illustrated at FIG1. At step 410, receiver node 220 receives first RTP packets 100 including first SSRC identifier SSRC1. At step 411, receiver node 220 receives second RTP packets 101 including second SSRC identifier SSRC2. At step 412, receiver node 220 receives a tracking information which associates SSRC1 to SSRC2 as detailed above. At step 413, receiver node 220 combines first RTP packets 100 and second RTP packets 101 into a single packet stream 102 as if they were associated to a unique transmitting source. Step 412 may be executed before step 411 or 410 depending on the embodiments. Also steps 411 and 410 may be inverted.

In particular, according to various embodiments, step 412 also includes, before combining step, a step of analyzing the field 701 of the header extension of RTP packets 100 and/or 101 to check if is specified a predefined profile parameter corresponding to a predefined profile to apply.

If field 701 includes such a predefined profile parameter, receiver node considers that the value, for example SSRC2, contained in the RTP packet header extension field 703 and SSRC identifier value, for example SSRC1, contained in the RTP packet analysed are SRRCs of a same source and that received RTP packets whose SSRC identifier is equal to SSRC1 or SSRC2 have to be combined in a unique stream to be played back together.

Such a combination of first and second RTP packets 100, 101 may be processed based on the sequence number and/or timestamp of the first and second RTP packets 100, 101. In various embodiments, receiver node is also configured to discard duplicated packets. A duplicated packet is a packet with same sequence number that the sequence number of another received packet.

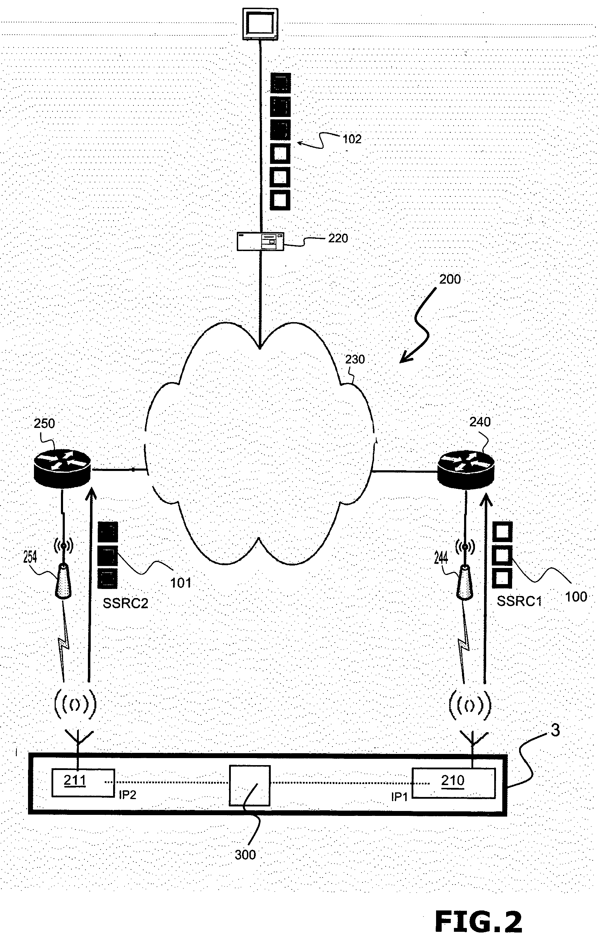

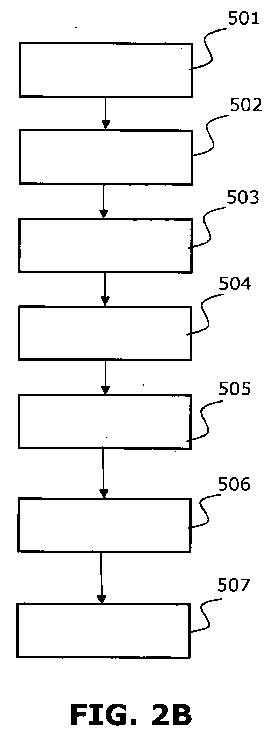

In the embodiments illustrated at FIG.1, FIG.1A, FIG.1B, FIG.1C and FIG.1D, both of said first RTP packets 100 and said second RTP packets 101 are generated at the unique packet stream source 210D of said transmitter node 210 respectively before and after a handoff of said transmitter node 210. FIG.2 illustrates another embodiment for which first RTP packets 100 and said second RTP packets 101 are generated by distinct packet stream sources 210D, 211D of distinct transmitter nodes 210 and 211.

In the embodiment of FIG. 2, transmitter node 210, access network routers 240 and 250, wireless access points 240, 250, Internet 230, and receiver node 220 are identical to the elements referred as same in the embodiment of FIG.1. Transmitter node 210 is similar to the one described in FIG.1 and comprises the same functional elements 210A, 210B, 210C, 210D, 210E as those detailed above with reference to FIG.1A. Embodiment of FIG.2 differs from the one of FIG.1 in that transmitter node 210 is integrated in a transmitter apparatus 3 which also integrates another transmitter node 211. For the clarity of description of embodiment of FIG.2, transmitter nodes 210 and 211 are not considered as mobile nodes. Obviously, transmitting apparatus 3 and corresponding nodes 210, 211 may be mobile and adapted to perform a handoff.

Transmitter node 211 is similar to transmitter node 210. As illustrated at FIG.2A, transmitter node 211 comprises a processor 31, generating means 211A and transmission means 211B. Said generating means 211A comprise a RTP packet generation source 211D adapted to communicate with processor 31 to generate a stream of RTP packets 101 derived from a signal source such as a microphone.

Transmission means 211B are adapted to transmit to receiver node 220 the generated stream of RTP packets 101 over one or more physical links, e.g., copper wire, optical fiber, or air (i.e., wireless). Transmitter node 211 also comprises acquisition means 211E adapted to acquire an IP address IP2 from said second access network router 250.

Transmitter nodes 210 and 211 are associated through an application 300. Said application 300 is configured on the transmitter apparatus 3 so that, in view of generating a RTP packets stream, said application instructs transmitter node 210 to generate some 100 of said RTP packets and instructs transmitter node 211 to generate some 101 of said RTP packets. Instructions may be conditioned to the properties of the wireless access points 244, respectively 254, through which node 210, respectively 211, is connected to access network router 240, respectively 250.

Transmitting apparatus 3 also comprises third means adapted to generate and transmit a tracking information associating said first SSRC identifier SSRC1 with said second SSRC identifier SSRC2 in order to indicate to said receiver node 220 that said first RTP packets 100 and second RTP packets 101 can be combined into a single packet stream. Said third means adapted to generate and transmit said tracking information may include means 211C integrated in node 211 and/or means 210C integrated in node 210. Means 211C integrated in node 211 and related tracking information may be realized in the same way as means 210C integrated in node 210 and related tracking information described above with reference to FIG1. In particular, according to various embodiments, means 211C integrated in node 211 are adapted to include SSRC1 of RTP packets 100 generated by source 210D of transmitter node 210 in the RTP packets 101 generated by source 211D of transmitter node 211.

The flowchart at FIG.2B illustrates an embodiment of the method for transmitting packets from transmitter apparatus 3 to receiver node 220 with reference to FIG.2.

At step 501, transmitter node 210 and transmitter node 211 acquire respectively first IP address IP1 from first access network router 240 and second IP address IP2 from second access network router 250. At step 502, each of transmitter node 210 and transmitter node 211 establishes a RTP session with receiver node 220. At step 503, source 210D of transmitter node 210 generates first RTP packets 100 including first SSRC identifier SSRC1. At step 504, source 211D of transmitter node 211 generates second RTP packets 101 including second SSRC identifier SSRC2.

At step 505, a tracking information which associates SSRC1 to SSRC2 as detailed above is transmitted to receiver node 220. At step 506, transmitter node 210 transmits to said receiver node 220, through said first access network 240, said first RTP packets 100. At step 507, transmitter node 211 transmits to said receiver node 220, through said second access network 250, said second RTP packets 101.

Step 505 may be executed before step 502, or between step 502 and 503, or between steps 503 and 504, or between steps 506 and 507. Steps 506 and 507 may be inverted. Steps 503 and 504 may also be inverted. In particular, according to various embodiments, tracking information is transmitted by transmitting apparatus 3 and /or by transmitter node 210 and /or 211 before or simultaneously with the transmission of first and second RTP packets 100, 101.

The method carried on by the receiver node 220 for seamlessly processing RTP packets 100, 101 according to the embodiment of FIG2, is the same that the one described with reference to FIG.1D, with the difference that RTP packets 101 are received from transmitter node 211 and not from transmitter node 210.

In various embodiments, transmitter node 210 or transmitter nodes 210 and 211, depending of the embodiments, may be multicast or unicast transmitter node(s). Receiver node 220 may also be a multicast or unicast receiver node.

Whatever the embodiments, payload of first and second RTP packets 100, 101 may be identical or different.

In particular, for an example with different payloads, second RTP packets 101 can include complementary data with regard to the data of first RTP packets, so that receiver node 220 combines first and second RTP packets by completing data of first RTP packets 100 with data of second RTP packets 101. For example, first RTP packets 100 may contain data corresponding to a low definition video stream, and second RTP packets 101 may contain complementary data which may be combined with data of first RTP packets 100 to generate a high definition video stream.

When payloads of first and second RTP packets are the same, the receiver node can use packets from said second packets to compensate for lost packets of first packets to reconstruct the stream.

In various embodiments, receiver node 220 is adapted to carry over statistics. In particular, measures listed below may be computed for first RTP packets 100 stream and/or second RTP packets 101 stream:
- fraction lost
- cumulative number of packets lost
- extended highest sequence number received
- interarrival jitter
- last sender report timestamp (LSR)
- delay since last sender report (DLSR)

It should be apparent from the foregoing description that various exemplary embodiments of the invention may be implemented in hardware, firmware, and/or software. Furthermore, various exemplary embodiments may be implemented as instructions stored on a machine-readable storage medium, which may be read and executed by at least one processor to perform the operations described in detail herein. A machine-readable storage medium may include any mechanism for storing information in a form readable by a machine, such as a computer, network node, router, switch, or similar device. Thus, a machine-readable storage medium may include read-only memory (ROM), random-access memory (RAM), magnetic disk storage media, optical storage media, flash-memory devices, and similar storage media.

Although the various exemplary embodiments have been described in detail with particular reference to certain exemplary aspects thereof, it should be understood that the invention is capable of other embodiments and its details are capable of modifications in various obvious respects.

## Claims

1. A method for transmitting RTP packets (100, 101) from at least a first transmitter node (210) to a receiver node (220) within a RTP session through a packet switched communication network (200), said method comprising the steps of:
generating (403) and transmitting (404) at said first transmitter node (210) first RTP packets (100) including a first SSRC identifier (SSRC1);
generating (408) and transmitting (409) second RTP packets (101) including a second SSRC identifier (SSRC2);
generating and transmitting (407) a tracking information associating said first SSRC identifier (SSRC1) with said second SSRC identifier (SSRC2) in order to indicate to said receiver node (220) that said first RTP packets (100) and second RTP packets (101) can be combined into a single packets stream as packets generated by the same source.

2. The method according to claim 1, wherein both of said first RTP packets (100) and said second RTP packets (101) are generated (403, 408) at a unique packet stream source (210D) of said first transmitter node (210) respectively before and after a handoff of said first transmitter node (210) from a first access network router (240) to a second access network router (250) of said packet switched communication network (200), said first RTP packets being transmitted (404) through said first access network router (240) and said second RTP packets being transmitted (409) through said second access network router (250).

3. The method according to claim 2, further comprising acquiring (401, 405), at said first transmitter node (210), a first IP address (IP1) and a second IP address (IP2) respectively from said first access network router (240) and said second access network router (250).

4. The method according to anyone of claims 2 or 3, wherein said tracking information is generated and transmitted (407) at said first transmitter node (210).

5. The method according to claim 1, wherein said first RTP packets (100) are generated (503) at a first packet stream source (210D) of said first transmitter node (210) while said second RTP packets (101) are generated (504) at a second packet stream source (211D) of a second transmitter node (211) associated with said first transmitter node (210), and wherein said first RTP packets are transmitted (506) through a first access network router (240) of said packet switched communication network while said second RTP packets (101) are transmitted (507) through a second access network router (250) of said packet switched communication network.

6. The method according to claim 5, further comprising acquiring (501), at said first transmitter node (210), a first IP address (IP1) from said first access network router (240) and acquiring, at said second transmitter node (211), a second IP address (IP2) from said second access network router (250).

7. The method according to anyone of the preceding claims, further comprising transmitting said tracking information before or simultaneously with said second RTP packets (101).

8. A method for seamlessly processing, at a receiver node (220), RTP packets (100, 101) received from at least a first transmitter node (210) within a RTP session through a packet switched communication network (200), said method comprising the steps of :
receiving (410, 411) at said receiver node (220) at least first RTP packets (100) including a first SSRC identifier (SSRC1) and second RTP packets (101) including a second SSRC identifier (SSRC2);
combining (413) at said receiver node (220) said at least first RTP packets (100) and second RTP packets (101) into a single packet stream (102) as packets generated by the same source, upon reception (412) of a tracking information associating said first SSRC identifier (SSRC1) with said second SSRC identifier (SSRC2).

9. A transmitting apparatus for transmitting RTP packets (100, 101) to a receiver node (220) within a RTP session through a packet switched communication network (200), said transmitting apparatus comprising:
a first transmitter node (210) comprising first generating means (210A) and first transmission means (210B) adapted to respectively generate and transmit first RTP packets (100) including a first SSRC identifier (SSRC1);
second generating means (210A; 211A) and second transmission means (210B; 211B) respectively adapted to generate and transmit second RTP packets (101) including a second SSRC identifier (SSRC2);
third means (210C; 211C) adapted to generate and transmit a tracking information associating said first SSRC identifier (SSRC1) with said second SSRC identifier (SSRC2) in order to indicate to said receiver node (220) that said first RTP packets (100) and second RTP packets (101) can be combined into a single packet stream as packets generated by the same source.

10. The transmitting apparatus according to claim 9, wherein said first generating means and said second generating means comprise a unique packet stream source (210D) of said first transmitter node (210), and wherein said first transmission means, said second transmission means and said third means are within said first transmitter node (210), said unique packet stream source (210D) being adapted to generate both of said first RTP packets (100) and said second RTP packets (101) respectively before and after a handoff of said first transmitter node (210) from a first access network router (240) to a second access network router (250) of said packet switched communication network (200), said first transmission means being adapted to transmit said first RTP packets (100) through said first access network router (240) and said second transmission means being adapted to transmit said second RTP packets (101) being transmitted through said second access network router (250).

11. The transmitting apparatus according to claim 10, wherein said first transmitter node (210) further comprises acquisition means (210E) adapted to acquire a first IP address (IP1) and a second IP address (IP2) respectively from said first access network router (240) and said second access network router (250).

12. The transmitting apparatus according to claim 9, wherein said first generating means comprise a first packet stream source (210D) of said first transmitter node (210) while said second generating means comprise a second packet stream source (211D) of a second transmitter node (211) associated with said first transmitter node (210), wherein said first transmission means are within said first transmitter node and are adapted to transmit said first RTP packets through a first access network router (240) of said packet switched communication network (200) while said second transmission means are within said second transmitter node (211) and are adapted to transmit said second RTP packets (101) through a second access network router (250) of said packet switched communication network (200).

13. The transmission apparatus according to claim 12, wherein said first transmitter node (210) further comprises first acquisition means (210E) adapted to acquire a first IP address (IP1) from said first access network router (240) and said second transmitter node (211) further comprises second acquisition means (211E) adapted to acquire a second IP address (IP2) from said second access network router (250).

14. The transmitter apparatus according to anyone of claims 9 to 13, further adapted to transmit said tracking information before or simultaneously with said second RTP packets (101).

15. A receiver node (220) for seamlessly processing RTP packets (100, 101) received from at least a first transmitter node (210) within a RTP session through a packet switched communication network (200), said receiver node (220) comprising:
receiving means (220B) adapted for receiving at least first RTP packets (100) including a first SSRC identifier (SSRC1), second RTP packets (101) including a second SSRC identifier (SSRC2) and a tracking information associating said first SSRC identifier (SSRC1) with said second SSRC identifier (SSRC2) ;
combining means (220A) adapted to combine, upon reception of said tracking information, said at least first RTP packets (100) and second RTP packets (101) into a single packet stream as packets generated by the same source.

## Patentansprüche

1. Verfahren zum Senden von RTP-Paketen (100, 101) von mindestens einem ersten Senderknoten (210) an einen Empfängerknoten (220) innerhalb einer RTP-Sitzung über ein paketgeschaltetes Kommunikationsnetzwerk (200), wobei besagtes Verfahren folgende Schritte umfasst:
Erzeugen (403) und Senden (404), am besagten ersten Senderknoten (210), erster RTP-Pakete (100), die einen ersten SSRC-Identifikator (SSRC1) umfassen;
Erzeugen (408) und Senden (409) zweiter RTP-Pakete (101), die einen zweiten SSRC-Identifikator (SSRC2) umfassen;
Erzeugen und Senden (407) einer Zurückverfolgungsinformation, die besagten ersten SSRC-Identifikator (SSRC1) dem besagten zweiten SSRC-Identifikator (SSRC2) zuordnet, um dem besagten Empfängerknoten (220) anzuzeigen, dass die besagten ersten RTP-Pakete (100) und zweiten RTP-Pakete (101) in einen einzelnen Paketstrom als von der gleichen Quelle erzeugte Pakete vereint werden können.

2. Verfahren nach Anspruch 1, wobei sowohl die besagten ersten RTP-Pakete (100) als auch die besagten zweiten RTP-Pakete (101) an einer einzigen Paketstromquelle (210D) des besagten ersten Senderknotens (210) jeweils vor und nach einer Übergabe des besagten ersten Senderknotens (210) von einem ersten Zugangsnetzwerkrouter (240) an einen zweiten Zugangsnetzwerkrouter (250) des besagten paketgeschalteten Kommunikationsnetzwerks (200) erzeugt (403, 408) werden, wobei die besagten ersten RTP-Pakete über den besagten ersten Zugangsnetzwerkrouter (240) gesendet (404) werden und die besagten zweiten RTP-Pakete über den besagten zweiten Zugangsnetzwerkrouter (250) gesendet (409) werden.

3. Verfahren nach Anspruch 2, weiterhin umfassend das Erfassen (401, 405), am besagten ersten Senderknoten (210), einer ersten IP-Adresse (IP1) und einer zweiten IP-Adresse (IP2) jeweils vom besagten ersten Zugangsnetzwerkrouter (240) und besagten zweiten Zugangsnetzwerkrouter (250).

4. Verfahren nach einem beliebigen der Ansprüche 2 oder 3, wobei besagte Zurückverfolgungsinformation am besagten ersten Senderknoten (210) erzeugt und gesendet (407) wird.

5. Verfahren nach Anspruch 1, wobei die besagten ersten RTP-Pakete (100) an einer ersten Paketstromquelle (210D) des besagten ersten Senderknotens (210) erzeugt (503) werden, während die besagten zweiten RTP-Pakete (101) an einer zweiten Paketstromquelle (211 D) eines zweiten Senderknotens (211) erzeugt (504) werden, der dem besagten ersten Senderknoten (210) zugeordnet ist, und wobei die besagten ersten RTP-Pakete über einen ersten Zugangsnetzwerkrouter (240) des besagten paketgeschalteten Kommunikationsnetzwerks gesendet (506) werden, während die besagten zweiten RTP-Pakete (101) über einen zweiten Zugangsnetzwerkrouter (250) des besagten paketgeschalteten Kommunikationsnetzwerks gesendet (507) werden.

6. Verfahren nach Anspruch 5, weiterhin umfassend das Erfassen (501), am besagten ersten Senderknoten (210), einer ersten IP-Adresse (IP1) von dem besagten ersten Zugangsnetzwerkrouter (240) und das Erfassen, am besagten zweiten Senderknoten (211), einer zweiten IP-Adresse (IP2) von dem besagten zweiten Zugangsnetzwerkrouter (250).

7. Verfahren nach einem beliebigen der vorstehenden Ansprüche, weiterhin umfassend das Senden der besagten Zurückverfolgungsinformation vor oder gleichzeitig mit den besagten zweiten RTP-Paketen (101).

8. Verfahren zur übergangslosen Verarbeitung, an einem Empfängerknoten (220), von RTP-Paketen (100, 101), die von mindestens einem ersten Senderknoten (210) innerhalb einer RTP-Sitzung über ein paketgeschaltetes Kommunikationsnetzwerk (200) empfangen werden, wobei besagtes Verfahren folgende Schritte umfasst:
Empfangen (410, 411), am besagten Empfängerknoten (220), von mindestens ersten RTP-Paketen (100), die einen ersten SSRC-Identifikator (SSRC1) umfassen, und zweiten RTP-Paketen (101), die einen zweiten SSRC-Identifikator (SSRC2) umfassen;
Vereinen (413), am besagten Empfängerknoten (220), der besagten mindestens ersten RTP-Pakete (100) und zweiten RTP-Pakete (101) in einen einzelnen Paketstrom (102) als von der gleichen Quelle erzeugte Pakete, nach Empfang (412) einer Zurückverfolgungsinformation, die besagten ersten SSRC-Identifikator (SSRC1) dem besagten zweiten SSRC-Identifikator (SSRC2) zuordnet.

9. Sendevorrichtung zum Senden von RTP-Paketen (100, 101) an einen Empfängerknoten (220) innerhalb einer RTP-Sitzung über ein paketgeschaltetes Kommunikationsnetzwerk (200), wobei besagte Sendevorrichtung Folgendes umfasst:
einen ersten Senderknoten (210), umfassend erste Erzeugungsmittel (210A) und erste Sendemittel (210B), die jeweils angepasst sind zum Erzeugen und Senden erster RTP-Pakete (100), die einen ersten SSRC-Identifikator (SSRC1) umfassen;
zweite Erzeugungsmittel (210A; 211A) und zweite Sendemittel (210B; 211B), die jeweils angepasst sind zum Erzeugen und Senden zweiter RTP-Pakete (101), die einen zweiten SSRC-Identifikator (SSRC2) umfassen;
dritte Mittel (210C; 211C), die angepasst sind zum Erzeugen und Senden einer Zurückverfolgungsinformation, die besagten ersten SSRC-Identifikator (SSRC1) dem besagten zweiten SSRC-Identifikator (SSRC2) zuordnet, um dem besagten Empfängerknoten (220) anzuzeigen, dass die besagten ersten RTP-Pakete (100) und zweiten RTP-Pakete (101) in einen einzelnen Paketstrom als von der gleichen Quelle erzeugte Pakete vereint werden können.

10. Sendevorrichtung nach Anspruch 9, wobei die besagten ersten Erzeugungsmittel und die besagten zweiten Erzeugungsmittel eine einzige Paketstromquelle (210D) des besagten ersten Senderknotens (210) umfassen, und wobei die besagten ersten Sendemittel, die besagten zweiten Sendemittel und die besagten dritten Mittel innerhalb des besagten ersten Senderknotens (210) sind, wobei besagte einzige Paketstromquelle (210D) angepasst ist zum Erzeugen von sowohl den besagten ersten RTP-Paketen (100) als auch den besagten zweiten RTP-Paketen (101) jeweils vor und nach einer Übergabe des besagten ersten Senderknotens (210) von einem ersten Zugangsnetzwerkrouter (240) an einen zweiten Zugangsnetzwerkrouter (250) des besagten paketgeschalteten Kommunikationsnetzwerks (200), wobei die besagten ersten Sendemittel angepasst sind zum Senden der besagten ersten RTP-Pakete (100) über den besagten ersten Zugangsnetzwerkrouter (240) und die besagten zweiten Sendemittel angepasst sind zum Senden der besagten zweiten RTP-Pakete (101) über den besagten zweiten Zugangsnetzwerkrouter (250).

11. Sendevorrichtung nach Anspruch 10, wobei besagter erster Senderknoten (210) weiterhin Erfassungsmittel (210E) umfasst, die angepasst sind zum Erfassen einer ersten IP-Adresse (IP1) und einer zweiten IP-Adresse (IP2) jeweils vom besagten ersten Zugangsnetzwerkrouter (240) und besagten zweiten Zugangsnetzwerkrouter (250).

12. Sendevorrichtung nach Anspruch 9, wobei die besagten ersten Erzeugungsmittel eine erste Paketstromquelle (210D) des besagten ersten Senderknotens (210) umfassen, während die besagten zweiten Erzeugungsmittel eine zweite Paketstromquelle (211 D) eines zweiten Senderknotens (211) umfassen, der dem besagten ersten Senderknoten (210) zugeordnet ist, wobei die besagten ersten Sendemittel innerhalb des besagten ersten Senderknotens und angepasst sind zum Senden der besagten ersten RTP-Pakete über einen ersten Zugangsnetzwerkrouter (240) des besagten paketgeschalteten Kommunikationsnetzwerks (200), während die besagten zweiten Sendemittel innerhalb des besagten zweiten Senderknotens (211) und angepasst sind zum Senden der besagten zweiten RTP-Pakete (101) über einen zweiten Zugangsnetzwerkrouter (250) des besagten paketgeschalteten Kommunikationsnetzwerks (200).

13. Sendevorrichtung nach Anspruch 12, wobei der besagte erste Senderknoten (210) weiterhin erste Erfassungsmittel (210E) umfasst, die angepasst sind zum Erfassen einer ersten IP-Adresse (IP1) von dem besagten ersten Zugangsnetzwerkrouter (240) und der besagte zweite Senderknoten (211) weiterhin zweite Erfassungsmittel (211 E) umfasst, die angepasst sind zum Erfassen einer zweiten IP-Adresse (IP2) von dem besagten zweiten Zugangsnetzwerkrouter (250).

14. Sendevorrichtung nach einem beliebigen der Ansprüche 9 bis 13, die weiterhin angepasst ist zum Senden der besagten Zurückverfolgungsinformation vor oder gleichzeitig mit den besagten zweiten RTP-Paketen (101).

15. Empfängerknoten (220) zur übergangslosen Verarbeitung von RTP-Paketen (100, 101), die von mindestens einem ersten Senderknoten (210) innerhalb einer RTP-Sitzung über ein paketgeschaltetes Kommunikationsnetzwerk (200) empfangen werden, wobei besagter Empfängerknoten (220) Folgendes umfasst:
Empfangsmittel (220B), die angepasst sind zum Empfangen von mindestens ersten RTP-Paketen (100), die einen ersten SSRC-Identifikator (SSRC1) umfassen, zweiten RTP-Paketen (101), die einen zweiten SSRC-Identifikator (SSRC2) umfassen, und einer Zurückverfolgungsinformation, die besagten ersten SSRC-Identifikator (SSRC1) dem besagten zweiten SSRC-Identifikator (SSRC2) zuordnet;
Vereinigungsmittel (220A), die angepasst sind zum Vereinen, nach Empfang der besagten Zurückverfolgungsinformation, der besagten mindestens ersten RTP-Pakete (100) und zweiten RTP-Pakete (101) in einen einzelnen Paketstrom als von der gleichen Quelle erzeugte Pakete.

## Revendications

1. Procédé de transmission de paquets RTP (100, 101) depuis au moins un premier noeud émetteur (210) vers un noeud récepteur (220) dans une session RTP via un réseau de communication à commutation de paquets (200), ledit procédé comprenant les étapes suivantes :
générer (403) et transmettre (404) au niveau dudit premier noeud émetteur (210) des premiers paquets RTP (100) incluant un premier identifiant SSRC (SSRC1) ;
générer (408) et transmettre (409) des deuxièmes paquets RTP (101) incluant un deuxième identifiant SSRC (SSRC2) ;
générer et transmettre (407) une information de suivi associant ledit premier identifiant SSRC (SSRC1) audit deuxième identifiant SSRC (SSRC2) afin d'indiquer audit noeud récepteur (220) que lesdits premiers paquets RTP (100) et deuxièmes paquets RTP (101) peuvent être combinés dans un train de paquets unique en tant que paquets générés par la même source.

2. Procédé selon la revendication 1, dans lequel à la fois lesdits premiers paquets RTP (100) et lesdits deuxièmes paquets RTP (101) sont générés (403, 408) au niveau d'une source de train de paquets unique (210D) dudit premier noeud émetteur (210) respectivement avant et après un transfert dudit premier noeud émetteur (210) d'un premier routeur d'accès au réseau (240) à un deuxième routeur d'accès au réseau (250) dudit réseau de communication à commutation de paquets (200), lesdits premiers paquets RTP étant transmis (404) via ledit premier routeur d'accès au réseau (240) et lesdits deuxièmes paquets RTP étant transmis (409) via ledit deuxième routeur d'accès au réseau (250).

3. Procédé selon la revendication 2, comprenant en outre l'acquisition (401, 405), au niveau dudit premier noeud émetteur (210), d'une première adresse IP (IP1) et d'une deuxième adresse IP (IP2) provenant respectivement dudit premier routeur d'accès au réseau (240) et dudit deuxième routeur d'accès au réseau (250).

4. Procédé selon l'une quelconque des revendications 2 ou 3, dans lequel ladite information de suivi est générée et transmise (407) au niveau dudit premier noeud émetteur (210).

5. Procédé selon la revendication 1, dans lequel lesdits premiers paquets RTP (100) sont générés (503) au niveau d'une première source de train de paquets (210D) dudit premier noeud émetteur (210) tandis que lesdits deuxièmes paquets RTP (101) sont générés (504) au niveau d'une deuxième source de train de paquets (211 D) d'un deuxième noeud émetteur (211) associé audit premier noeud émetteur (210), et dans lequel lesdits premiers paquets RTP sont transmis (506) via un premier routeur d'accès au réseau (240) dudit réseau de communication à commutation de paquets tandis que lesdits deuxièmes paquets RTP (101) sont transmis (507) via un deuxième routeur d'accès au réseau (250) dudit réseau de communication à commutation de paquets.

6. Procédé selon la revendication 5, comprenant en outre l'acquisition (501), au niveau dudit premier noeud émetteur (210), d'une première adresse IP (IP1) provenant dudit premier routeur d'accès au réseau (240) et l'acquisition, au niveau du deuxième noeud émetteur (211), d'une deuxième adresse IP (IP2) provenant dudit deuxième routeur d'accès au réseau (250).

7. Procédé selon l'une quelconque des revendications précédentes, comprenant en outre la transmission de ladite information de suivi avant ou en même temps que lesdits deuxièmes paquets RTP (101).

8. Procédé pour traiter de façon transparente, au niveau d'un noeud récepteur (220), des paquets RTP (100, 101) reçus d'au moins un premier noeud émetteur (210) dans une session RTP via un réseau de communication à commutation de paquets (200), ledit procédé comprenant les étapes suivantes :
recevoir (410, 411) au niveau dudit noeud récepteur (220) au moins des premiers paquets RTP (100) incluant un premier identifiant SSRC (SSRC1) et des deuxièmes paquets RTP (101) incluant un deuxième identifiant SSRC (SSRC2) ;
combiner (413) au niveau dudit noeud récepteur (220) lesdits au moins premiers paquets RTP (100) et deuxièmes paquets RTP (101) en un train de paquets unique (102) en tant que paquets générés par la même source, à la réception (412) d'une information de suivi associant ledit premier identifiant SSRC (SSRC1) audit deuxième identifiant SSRC (SSRC2).

9. Appareil de transmission pour transmettre des paquets RTP (100, 101) à un noeud récepteur (220) dans une session RTP via un réseau de communication à commutation de paquets (200), ledit appareil de transmission comprenant :
un premier noeud émetteur (210) comprenant des premiers moyens de génération (210A) et des premiers moyens de transmission (210B) adaptés pour respectivement générer et transmettre des premiers paquets RTP (100) incluant un premier identifiant SSRC (SSRC1) ;
des deuxièmes moyens de génération (210A, 211 A) et des deuxièmes moyens de transmission (210B, 211B) respectivement adaptés pour générer et transmettre des deuxièmes paquets RTP (101) incluant un deuxième identifiant SSRC (SSRC2) ;
des troisièmes moyens (210C, 211C) adaptés pour générer et transmettre une information de suivi associant ledit premier identifiant SSRC (SSRC1) audit deuxième identifiant SSRC (SSRC2) pour indiquer audit noeud récepteur (220) que lesdits premiers paquets RTP (100) et deuxièmes paquets RTP (101) peuvent être combinés en un train de paquets unique en tant que paquets générés par la même source.

10. Appareil de transmission selon la revendication 9, dans lequel lesdits premiers moyens de génération et lesdits deuxièmes moyens de génération comprennent une source de train de paquets unique (210D) dudit premier noeud émetteur (210), et dans lequel lesdits premiers moyens de transmission, lesdits deuxièmes moyens de transmission et lesdits troisièmes moyens sont localisés dans ledit premier noeud émetteur (210), ladite source de train de paquets unique (210D) étant adaptée pour générer à la fois lesdits premiers paquets RTP (100) et lesdits deuxièmes paquets RTP (101) respectivement avant et après un transfert dudit premier noeud émetteur (210) d'un premier routeur d'accès au réseau (240) à un deuxième routeur d'accès au réseau (250) dudit réseau de communication à commutation de paquets (200), lesdits premiers moyens de transmission étant adaptés pour transmettre, lesdits premiers paquets RTP (100) via ledit premier routeur d'accès au réseau (240) et lesdits deuxièmes moyens de transmission étant adaptés pour transmettre lesdits deuxièmes paquets RTP (101) transmis via ledit deuxième routeur d'accès au réseau (250).

11. Appareil de transmission selon la revendication 10, dans lequel ledit premier noeud émetteur (210) comprend en outre des moyens d'acquisition (210E) adaptés pour acquérir une première adresse IP (IP1) et une deuxième adresse IP (IP2) respectivement à partir dudit premier routeur d'accès au réseau (240) et dudit deuxième routeur d'accès au réseau (250).

12. Appareil de transmission selon la revendication 9, dans lequel lesdits premiers moyens de génération comprennent une première source de train de paquets (210D) dudit premier noeud émetteur (210) tandis que lesdits deuxièmes moyens de génération comprennent une deuxième source de train de paquets (211 D) d'un deuxième noeud émetteur (211) associé audit premier noeud émetteur (210), dans lequel lesdits premiers moyens de transmission sont localisés dans ledit premier noeud émetteur et sont adaptés pour transmettre lesdits premiers paquets RTP via un premier routeur d'accès au réseau (240) dudit réseau de communication à commutation de paquets (200) tandis que lesdits deuxièmes moyens de transmission sont localisés dans le deuxième noeud émetteur (211) et sont adaptés pour transmettre lesdits deuxièmes paquets RTP (101) via un deuxième routeur d'accès au réseau (250) dudit réseau de communication à commutation de paquets (200).

13. Appareil de transmission selon la revendication 12, dans lequel ledit premier noeud émetteur (210) comprend en outre des premiers moyens d'acquisition (210E) adaptés pour acquérir une première adresse IP (IP1) dudit premier routeur d'accès au réseau (240) et ledit deuxième noeud émetteur (211) comprend en outre des deuxièmes moyens d'acquisition (211 E) adaptés pour acquérir une deuxième adresse IP (IP2) dudit deuxième routeur d'accès au réseau (250).

14. Appareil de transmission selon l'une quelconque des revendications 9 à 13, adapté en outre pour transmettre ladite information de suivi avant ou en même temps que lesdits deuxièmes paquets RTP (101).

15. Noeud récepteur (220) pour traiter de façon transparente des paquets RTP (100, 101) reçus d'au moins un premier noeud émetteur (210) dans une session RTP via un réseau de communication à commutation de paquets (200), ledit noeud récepteur (220) comprenant :
des moyens de réception (220B) adaptés pour recevoir au moins des premiers paquets RTP (100) incluant un premier identifiant SSRC (SSRC1), des deuxièmes paquets RTP (101) incluant un deuxième identifiant SSRC (SSRC2) et une information de suivi associant ledit premier identifiant SSRC (SSRC1) audit deuxième identifiant SSRC (SSRC2) ;
des moyens de combinaison (220A) adaptés pour combiner, à la réception de ladite information de suivi, lesdits au moins premiers paquets RTP (100) et
deuxièmes paquets RTP (101) dans un train de paquets unique en tant que paquets générés par la même source.
